(19) Europäisches Patentamt
European Patent Office
Office européen des brevets

(11) **EP 1 940 662 B1**

## (12) FASCICULE DE BREVET EUROPEEN

(45) Date de publication et mention
de la délivrance du brevet:
**25.07.2012 Bulletin 2012/30**

(21) Numéro de dépôt: **06831210.7**

(22) Date de dépôt: **21.09.2006**

(51) Int Cl.:
***B60T 8/172*** *(2006.01)*        ***B60T 8/173*** *(2006.01)*

(86) Numéro de dépôt international:
**PCT/FR2006/050922**

(87) Numéro de publication internationale:
**WO 2007/048947 (03.05.2007 Gazette 2007/18)**

(54) **PROCEDE DE DETERMINATION DE L'ETAT DES ROUES D'UN VEHICULE AUTOMOBILE ET DISPOSITIF DE MISE EN OEUVRE**

VERFAHREN ZUR BESTIMMUNG DES ZUSTANDES VON KRAFTFAHRZEUGREIFEN UND VORRICHTUNG DAFÜR

METHOD FOR DETERMINING THE CONDITION OF A MOTOR VEHICLE WHEELS AND DEVICE THEREFOR

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.10.2005 FR 0511072**

(43) Date de publication de la demande:
**09.07.2008 Bulletin 2008/28**

(73) Titulaire: **Renault s.a.s.**
**92100 Boulogne Billancourt (FR)**

(72) Inventeurs:
• **CLAEYS, Xavier**
**F-78000 Versailles (FR)**
• **PALLADINO, Luca**
**I-10143 Torino (IT)**
• **POTHIN, Richard**
**F-78760 Jouars-Ponchartrain (FR)**
• **POGNANT-GROS, Philippe**
**F-92500 Rueil-Malmaison (FR)**

(56) Documents cités:
**WO-A-01/32483        DE-A1- 10 104 600**
**US-A- 5 557 520        US-A1- 2004 010 383**

EP 1 940 662 B1

**Description**

La présente invention concerne un procédé de détermination de l'état des roues d'un véhicule automobile par vérification de la cohérence entre une mesure de vitesse des roues et la dynamique du véhicule. Elle concerne également un dispositif de mise en oeuvre d'un tel procédé.

Le but de l'invention est d'améliorer le comportement du véhicule, et donc la sécurité du conducteur et des passagers, en vérifiant l'état de chaque roue. Elle s'applique à différents types de véhicules automobiles, comme les véhicules à traction, à propulsion, les véhicules hybrides ou à quatre roues motrices.

Actuellement, il existe deux méthodes différentes pour déterminer l'état d'une roue. La première, décrite dans la demande de brevet US 6 823 242 au nom de Norfolk Southern Corporation, qui dérive du milieu ferroviaire, considère la température de la roue pour déterminer si elle est bloquée ou en train de se bloquer, en la comparant à une température moyenne des autres roues d'un même essieu. La seconde méthode, décrite dans la demande WO 98/03380, au nom de ITT Manufacturing Enterprises, effectue l'estimation de l'état de la roue à partir d'une mesure et/ou une estimation de glissement, dans le but du contrôle latéral du véhicule par appréciation de la dérive.

Le but de l'invention est de pallier ces inconvénients tenant au fait qu'il n'est pas réaliste de mesurer la température des roues d'un véhicule automobile comme le décrit la première antériorité, et que le contrôle latéral du véhicule est trop restrictif.

Un procédé de détermination de l'état des roues d'un véhicule automobile selon le préambule de la revendication 1 est décrit dans la demande de brevet DE 10104600.

Pour cela, un premier objet de l'invention est un procédé de détermination de l'état des roues d'un véhicule automobile équipé d'un calculateur, électronique embarqué et de capteurs, comportant une première phase d'estimation de la vitesse de rotation de chaque roue et de sa perturbation à partir de la vitesse mesurée de ladite roue par un capteur, du couple moteur et du couple de freinage qui lui sont appliqués,

- une deuxième phase de détermination de l'évolution de la vitesse de chaque roue par rapport à la vitesse du véhicule,
- une troisième phase de confirmation de l'état de chaque roue par comparaison des résultats respectifs des deux phases précédentes pour détecter si l'état de la roue est normal, défini par une vitesse de roue cohérente avec la dynamique du véhicule, ou si la roue est en état de patinage ou en état de blocage, caractérisé en ce que la phase de détermination de l'évolution de la vitesse de chaque roue par rapport à la vitesse du véhicule comporte une étape de calcul de la différence entre la mesure de la vitesse de rotation de la roue et la vitesse longitudinale du véhicule mesurée ou estimée, divisée par le rayon de la roue, suivie d'une étape de filtrage du premier ordre de l'erreur sur la vitesse, simultanée avec une étape de filtrage du premier ordre de l'erreur sur l'accélération, ces deux erreurs sur la vitesse et l'accélération ainsi obtenues étant ensuite comparées à des seuils distincts et respectifs.

Selon une autre caractéristique du procédé, la phase d'estimation de la vitesse d'une roue et de sa perturbation comporte une première étape d'estimation de la vitesse de rotation de la roue ainsi que de sa perturbation, homogène à une accélération, par un observateur de Luenberger notamment, à partir de la mesure de sa vitesse, du couple moteur et du couple de freinage qui lui sont appliqués, suivie d'une comparaison de la perturbation sur l'estimation de la vitesse de la roue avec un seuil, pour apprécier l'importance de la perturbation sur l'estimation.

Un second objet de l'invention est un dispositif de mise en oeuvre du procédé tel qu'il comporte, pour réaliser la première phase d'estimation de la vitesse d'une roue, des premiers moyens dits d'estimation, à partir de la mesure de sa vitesse de rotation, du couple moteur et du couple de freinage qui lui sont appliqués, constituant les entrées d'un observateur de Luenberger destiné à délivrer cette estimation de la vitesse de rotation de la roue ainsi que de sa perturbation, homogène à une accélération, ledit observateur utilisant les équations dynamiques de la roue et de la perturbation.

Selon une autre caractéristique du dispositif selon l'invention, ladite deuxième phase de détermination de l'évolution de la vitesse de chaque roue est réalisée par des deuxièmes moyens dits de détermination, à partir d'une estimation ou d'une mesure de la vitesse longitudinale $V_{ref}$ du véhicule d'une part et de la mesure de la vitesse de rotation w de la roue d'autre part, constitués d'un sommateur réalisant la différence entre ces deux mesures puis de deux filtres, un premier filtre du premier ordre sur la vitesse et un second filtre du premier ordre sur l'accélération de la roue, obtenue par dérivation de la vitesse, dont les sorties respectives $d_V$ et $d_A$ sont égales à :

$$d_V = \frac{\omega - \omega_{ref}}{\tau s + 1} \quad \text{et} \quad d_A = \frac{(\omega - \omega_{ref}) * s}{\tau s + 1}$$

s étant le terme de Laplace, $\tau$ étant le coefficient de filtrage dépendant du capteur choisi,

ces deux valeurs $d_V$ et $d_A$ étant ensuite comparées chacune à un seuil dans des comparateurs qui délivrent chacun, si les valeurs absolues de $d_V$ et $d_A$ ne dépassent pas chacune leur seuil respectif, un signal binaire égal à 1, et en ce que les sorties de ces deux comparateurs sont envoyées dans un circuit logique, qui est une porte ET, permettant de vérifier que les deux conditions précédentes sur la vitesse et l'accélération sont remplies simultanément.

Selon une autre caractéristique du dispositif selon l'invention, ladite troisième phase de confirmation de l'état de chaque roue est réalisée par des troisièmes moyens logiques de commande du type porte ET, recevant en entrée les signaux de sortie respectivement des premiers moyens d'estimation et des deuxièmes moyens de détermination, pour délivrer un signal d'information sur l'état de la roue.

D'autres caractéristiques et avantages de l'invention apparaîtront au cours de la description suivante donnée uniquement à titre d'exemple non limitatif, illustrée par les figures suivantes qui sont :

- la figure 1 : un schéma fonctionnel du procédé de détermination de l'état d'une roue selon l'invention,
- la figure 2 : un schéma fonctionnel d'un observateur de Luenberger,
- la figure 3 : un schéma des différents moyens constitutifs du dispositif de mise en oeuvre du procédé selon l'invention.

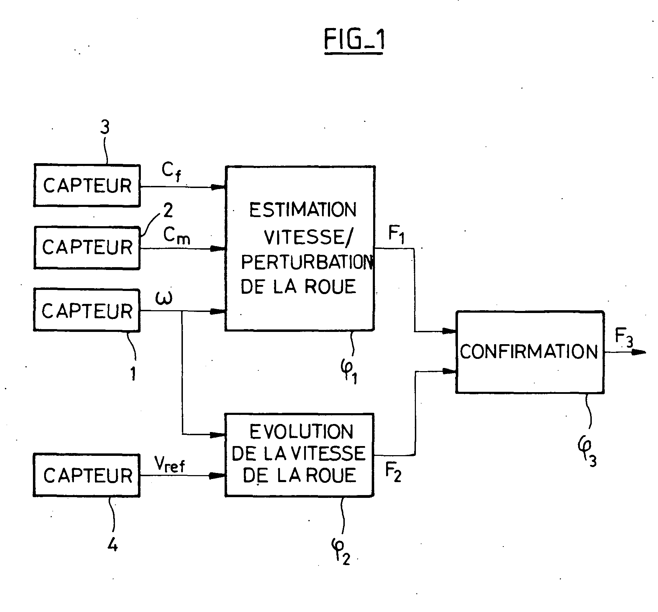

Le procédé de détermination de l'état des roues d'un véhicule selon l'invention a pour but de détecter si l'état de chaque roue est normal, c'est-à-dire si sa vitesse de rotation est cohérente avec la dynamique du véhicule, ou si elle est en état de patinage ou en état de blocage. Pour cela, il comporte une phase $\varphi_1$ d'estimation de la vitesse de rotation de la roue et de sa perturbation, à partir de la vitesse mesurée $\omega$ de ladite roue par un capteur 1, du couple moteur $C_m$ et du couple de freinage $C_f$ qui lui sont appliqués et dont les valeurs sont données respectivement par deux capteurs 2 et 3 embarqués sur le véhicule, comme le montre la figure 1 qui représente un schéma fonctionnel du procédé.

Cette phase $\varphi_1$ comporte une première étape d'estimation de la vitesse de rotation $\omega$ de la roue ainsi que de sa perturbation d, homogène à une accélération, par un observateur de Luenberger par exemple ou une autre méthode algorithmique, à partir de la mesure de sa vitesse $\omega$, du couple moteur $C_m$ et du couple de freinage $C_f$ qui lui sont appliqués. L'observateur délivre donc une estimation de la perturbation $\hat{d}$ sur la vitesse de la roue, qui, dans une seconde étape, est envoyée dans un comparateur de seuil $C_s$, pour apprécier l'importance de la perturbation sur l'estimation. Cette perturbation $\hat{d}$ est comparée à un seuil $s_d$ et, si sa valeur absolue est supérieure au seuil, elle est considérée comme importante et l'état de la roue n'est pas considéré comme normal. Dans ce cas, la sortie $F_1$ du comparateur délivre la valeur 0. Par contre, si la valeur absolue de la perturbation est inférieure audit seuil, elle est considérée comme peu importante, l'estimation de la vitesse est considérée comme bonne ainsi que l'état de la roue et le comparateur délivre la valeur 1.

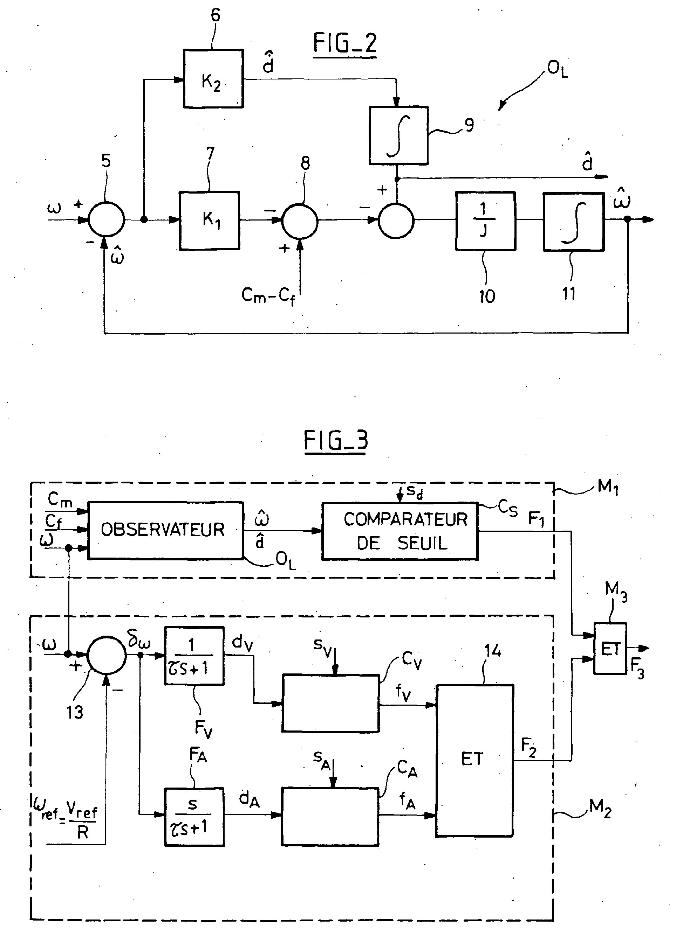

Comme le montre la figure 3 qui est un schéma des différents moyens constitutifs du dispositif de mise en oeuvre du procédé selon l'invention, embarqué sur le véhicule, cette phase $\varphi_1$ est réalisée par des premiers moyens $M_1$ dits d'estimation, à partir de la mesure de la vitesse de rotation $\omega$ de la roue, du couple moteur $C_m$ et du couple de freinage $C_f$ qui lui sont appliqués, constituant les entrées d'un observateur $O_L$ de Luenberger, destiné à délivrer cette estimation de la vitesse de rotation $\omega$ de la roue ainsi que de sa perturbation d, homogène à une accélération. Cet observateur utilise les équations dynamiques de la roue et de la perturbation d, constituant le système suivant :

$$\begin{cases} J * \dot{\omega} = C_m - C_f + d \\ \dot{d} = 0 \\ y = \omega \end{cases}$$

pour lesquelles J est le moment d'inertie de la roue, $\dot{d}$ est la dérivée de la perturbation qui est constante et y est la mesure de sortie de l'observateur.

Comme le montre le schéma de la figure 2, l'observateur $O_L$ présente la structure suivante : il comprend un circuit 5 de calcul de la différence entre la vitesse de rotation mesurée $\omega$ et son estimation $\hat{\omega}$ obtenue en sortie de l'observateur. Cette différence est multipliée, d'une part, dans une première branche par un coefficient $K_2$, dans un circuit multiplicateur 6 qui délivre une estimation de la dérivée de la perturbation $\hat{\dot{d}}$ qui est homogène à l'accélération de la roue, et d'autre part, dans une seconde branche par un coefficient $K_1$, dans un autre circuit multiplicateur 7. Le produit obtenu est ajouté aux couples moteur $C_m$ et de freinage $C_f$ appliqués à la roue, dans un premier circuit sommateur 8, puis à la perturbation obtenue par intégration de la dérivée $\dot{\hat{d}}$, dans un circuit intégrateur 9. Cette somme est ensuite divisée par l'inverse du moment d'inertie de la roue J, dans un circuit diviseur 10, puis passe dans un intégrateur 11 qui délivre la valeur estimée $\hat{\omega}$ de la vitesse de rotation, selon les équations suivantes :

$$J * \dot{\hat{\omega}} = C_m - C_f + \hat{d} + K_1 (\omega - \hat{\omega})$$

$$\dot{\hat{d}} = K_2 (\omega - \hat{\omega})$$

$K_1$ et $K_2$ étant des coefficients traduisant la dynamique de l'observateur et définis pour obtenir une bonne dynamique de la détection sans être trop sensible au bruit de mesure, $\hat{\omega}$ étant la vitesse de rotation, estimée de la roue, $(\omega - \hat{\omega})$ étant l'erreur d'estimation sur la vitesse $\omega$.

Pour confirmer cette estimation de l'état de la roue, le procédé peut comporter également une deuxième phase $\varphi_2$ de détermination de l'évolution de la vitesse de rotation de chaque roue par rapport à la vitesse longitudinale $V_{ref}$ du véhicule, délivrée par un capteur ou un estimateur 4. Les résultats respectifs de ces deux phases $\varphi_1$ et $\varphi_2$ sont comparés, dans une troisième phase $\varphi_3$ de confirmation, pour délivrer l'état des roues.

La phase $\varphi_2$ de détermination de l'évolution de la vitesse de la roue par rapport à la vitesse $V_{ref}$ du véhicule comporte une étape de calcul de la différence entre la mesure de la vitesse de rotation $\omega$ de la roue et la vitesse de rotation de référence égale à la vitesse longitudinale $V_{ref}$ du véhicule, estimée ou mesurée, divisée par le rayon R de la roue, suivie d'une étape de filtrage du premier ordre de l'erreur sur la vitesse, simultanée avec une étape de filtrage du premier ordre de l'erreur sur l'accélération, ces deux erreurs sur la vitesse et l'accélération ainsi obtenues étant ensuite comparées à des seuils $s_V$ et $s_A$ distincts et respectifs.

Pour cela, cette deuxième phase $\varphi_2$ est réalisée par des deuxièmes moyens $M_2$ dits de détermination de l'évolution de la vitesse des roues, à partir d'une estimation ou d'une mesure de la vitesse longitudinale $V_{ref}$ du véhicule d'une part et de la mesure de la vitesse de rotation w de la roue d'autre part. La différence $\delta\omega$ entre la vitesse mesurée $\omega$ et la vitesse de référence $\omega_{ref}$ est réalisée dans un circuit sommateur 13, puis elle est envoyée à travers deux filtres, un premier filtre $F_V$ du premier ordre sur la vitesse et un second filtre $F_A$ du premier ordre sur l'accélération de la roue, obtenue par dérivation de la vitesse, dont les sorties respectives $d_V$ et $d_A$ sont égales à :

$$d_v = \frac{\omega - \omega_{ref}}{\tau s + 1} \quad \text{et} \quad d_A = \frac{(\omega - \omega_{ref}) * s}{\tau s + 1} .$$

s étant le terme de Laplace, $\tau$ étant le coefficient de filtrage dépendant du capteur choisi.

Ces deux valeurs $d_V$ et $d_A$ sont ensuite comparées chacune à un seuil, $s_V$ et sA respectivement. Si les valeurs absolues de $d_V$ et $d_A$ ne dépassent pas chacune leur seuil respectif $s_V$ et $s_A$, les comparateurs $C_V$ et $C_A$ délivrent chacun un signal binaire $f_V$, respectivement $f_A$, égal à 1, ce qui signifie que la vitesse de la roue reste proche de celle du véhicule, de même que son accélération reste proche de celle du véhicule. Dans le cas contraire, les signaux binaires $f_V$ et $f_A$ sont égaux à 0. Les sorties de ces deux comparateurs $C_V$ et $C_A$ sont envoyées dans un circuit logique 14, qui est une porte ET, permettant de vérifier que les deux conditions précédentes sur la vitesse et l'accélération sont remplies simultanément. Ce circuit 13 délivre un signal binaire $F_2$ égal à 1 si les deux signaux $f_V$ et $f_A$ sont égaux à 0.

Enfin, le procédé comporte une troisième phase $\varphi_3$ de confirmation de l'état de la roue par comparaison des résultats respectifs des deux phases $\varphi_1$ et $\varphi_2$ précédentes, pour confirmer si l'état de rotation de la roue est normal, ou bien si elle est en état de blocage ou de patinage.

Pour cela, le signal $F_1$ de sortie des premiers moyens $M_1$ d'estimation et le signal $F_2$ de sortie des deuxièmes moyens $M_2$ de détermination sont envoyés sur des troisièmes moyens logiques $M_3$ de commande, du type porte logique ET, dont le signal de sortie $F_3$ donne une information sur l'état de la roue. En effet, si les deux signaux de sortie des premiers moyens 1 et des deuxièmes moyens 2 ont la même valeur 1, le procédé considère que l'état de la roue est normal.

**Revendications**

1. Procédé de détermination de l'état des roues d'un véhicule automobile équipé d'un calculateur électronique embarqué et de capteurs, comportant :

   - une première phase ($\varphi_1$) d'estimation de la vitesse de rotation de chaque roue et de sa perturbation à partir de la vitesse mesurée ($\omega$) de ladite roue par un capteur, du couple moteur ($C_m$) et du couple de freinage ($C_f$) qui lui sont appliqués,
   - une deuxième phase ($\varphi_2$) de détermination de l'évolution de la vitesse de chaque roue par rapport à la vitesse ($V_{ref}$) du véhicule,
   - une troisième phase ($\omega_3$) de confirmation de l'état de chaque roue par comparaison des résultats respectifs des deux phases précédentes ($\varphi_1$) d'estimation de la vitesse de rotation et ($\varphi_2$) de détermination de l'évolution de la vitesse pour détecter si l'état de la roue est normal, défini par une vitesse de roue cohérente avec la dynamique du véhicule, ou si la roue est en état de patinage ou en état de blocage, **caractérisé en ce que** la phase ($\varphi_2$) de détermination de l'évolution de la vitesse de chaque roue par rapport à la vitesse ($V_{ref}$) du véhicule comporte une étape de calcul de la différence entre la mesure de la vitesse de rotation ($\omega$) de la roue et la vitesse longitudinale ($V_{ref}$) du véhicule mesurée ou estimée, divisée par le rayon (R) de la roue, suivie d'une étape de filtrage du premier ordre de l'erreur sur la vitesse, simultanée avec une étape de filtrage du premier ordre de l'erreur sur l'accélération, ces deux erreurs sur la vitesse et l'accélération ainsi obtenues étant ensuite comparées à des seuils ($s_V$) et ($s_A$) distincts et respectifs.

2. Procédé de détermination selon la revendication 1, **caractérisé en ce que** la phase ($\varphi_1$) d'estimation de la vitesse d'une roue et de sa perturbation comporte une première étape d'estimation de la vitesse de rotation ($\omega$) de la roue ainsi que de sa perturbation (d), homogène à une accélération, par un observateur de Luenberger notamment, à partir de la mesure de sa vitesse ($\omega$), du couple moteur ($C_m$) et du couple de freinage ($C_f$) qui lui sont appliqués, suivie d'une deuxième étape de comparaison de l'estimation de la perturbation (d) sur la vitesse de la roue avec un seuil ($s_d$), pour apprécier l'importance de la perturbation sur l'estimation.

3. Dispositif de mise en oeuvre du procédé selon les revendications 1 et 2, **caractérisé en ce qu'**il est embarqué sur le véhicule et **en ce qu'**il comporte, pour réaliser la première phase ($\varphi_1$) d'estimation de la vitesse d'une roue, des premiers moyens ($M_1$) dits d'estimation, à partir de la mesure de sa vitesse ($\omega$), du couple moteur ($C_m$) et du couple de freinage ($C_f$) qui lui sont appliqués, constituant les entrées d'un observateur ($O_L$) de Luenberger destiné à délivrer cette estimation de la vitesse de rotation ($\hat{\omega}$) de la roue ainsi que de sa perturbation (d), homogène à une accélération, ledit observateur utilisant les équations dynamiques de la roue et de la perturbation (d).

4. Dispositif de mise en oeuvre du procédé selon la revendication 3, **caractérisé en ce qu'**il comporte de plus, pour réaliser ladite deuxième phase ($\varphi_2$) de détermination de l'évolution de la vitesse de chaque roue, des deuxièmes moyens ($M_2$) dits de détermination, à partir d'une estimation ou d'une mesure de la vitesse longitudinale ($V_{ref}$) du véhicule d'une part et de la mesure de la vitesse de rotation ($\omega$) de la roue d'autre part, constitués d'un sommateur (13) réalisant la différence ($\delta\omega$) entre ces deux mesures puis de deux filtres, un premier filtre ($F_V$) du premier ordre sur la vitesse et un second filtre ($F_A$) du premier ordre sur l'accélération de la roue, obtenue par dérivation de la vitesse, dont les sorties respectives ($d_V$ et $d_A$) sont égales à :

$$d_V = \frac{\omega - \omega_{ref}}{\tau s + 1} \quad \text{et} \quad d_A = \frac{(\omega - \omega_{ref}) * s}{\tau s + 1}$$

   s étant le terme de Laplace, $\tau$ étant le coefficient de filtrage dépendant du capteur choisi, ces deux valeurs ($d_V$ et $d_A$) étant ensuite comparées chacune à un seuil ($s_V$ et $S_A$) respectivement dans des comparateurs ($C_V$ et $C_A$) qui délivrent chacun, si les valeurs absolues de ($d_V$ et $d_A$) ne dépassent pas chacune leur seuil respectif ($s_V$ et $S_A$), un signal binaire ($f_V$), respectivement ($f_A$), égal à 1, et **en ce que** les sorties de ces deux comparateurs ($C_V$ et $C_A$) sont envoyées dans un circuit logique (14), qui est une porte ET, permettant de vérifier que les deux conditions précédentes sur la vitesse et l'accélération sont remplies simultanément.

5. Dispositif de mise en oeuvre du procédé selon les revendications 3 et 4, **caractérisé en ce qu'**il comporte de plus, pour réaliser ladite troisième phase ($\varphi_3$) de confirmation de l'état de chaque roue, des troisièmes moyens ($M_3$)

logiques de commande du type porte ET, recevant en entrée les signaux de sortie (F1) et (F2) respectivement des premiers moyens d'estimation et des deuxièmes moyens de détermination, pour délivrer un signal (F3) d'information sur l'état de la roue.

**Claims**

1. Method of determining the state of the wheels of a motor vehicle equipped with an onboard electronic calculator and sensors, comprising;

    - a first phase ($\varphi_1$) of estimating the rotation speed of each wheel and its perturbation on the basis of the speed ($\omega$) of the said wheel measured by a sensor, of the engine torque ($C_m$) and of the braking torque ($C_f$) which are applied to it,
    - a second phase ($\varphi_2$) of determining the evolution of the speed of each wheel with respect to the speed ($V_{ref}$) of the vehicle,
    - a third phase ($\varphi_3$) of confirming the state of each wheel by comparing the respective results of the two previous phases ($\varphi_1$) of estimating the rotation speed and ($\varphi_2$) of determining the evolution of the speed so as to detect whether the state of the wheel is normal, defined by a wheel speed consistent with the dynamics of the vehicle, or whether the wheel is in a skid state or in a lockup state,

    **characterized in that** the phase ($\varphi_2$) of determining the evolution of the speed of each wheel with respect to the speed ($V_{ref}$) of the vehicle comprises a step of calculating the difference between the measurement of the rotation speed ($\omega$) of the wheel and the measured or estimated longitudinal speed ($V_{ref}$) of the vehicle, divided by the radius (R) of the wheel, followed by a step of first-order filtering of the error in the speed, simultaneous with a step of first-order filtering of the error in the acceleration, these two errors thus obtained in the speed and the acceleration being thereafter compared with distinct and respective thresholds ($s_V$) and ($s_A$).

2. Method of determination according to Claim 1, **characterized in that** the phase ($\varphi_1$) of estimating the speed of a wheel and its perturbation comprises a first step of estimating the rotation speed ($\omega$) of the wheel as well as its perturbation (d), homogeneous to an acceleration, by a Luenberger observer especially, on the basis of the measurement of its speed ($\omega$), of the engine torque ($C_m$) and of the braking torque ($C_f$) which are applied to it, followed by a second step of comparing the estimation of the perturbation ($\hat{d}$) on the speed of the wheel with a threshold ($s_d$), so as to assess the significance of the perturbation on the estimation.

3. Device for implementing the method according to Claims 1 and 2, **characterized in that** it is embedded onboard the vehicle and **in that** it comprises, for carrying out the first phase ($\varphi_1$) of estimating the speed of a wheel, first means ($M_1$) of so-called estimation, on the basis of the measurement of its speed ($\omega$), of the engine torque ($C_m$) and of the braking torque ($C_f$) which are applied to it, constituting the inputs of a Luenberger observer ($O_L$) intended to deliver this estimation of the rotation speed ($\hat{\omega}$) of the wheel as well as its perturbation ($\hat{d}$), homogeneous to an acceleration, the said observer using the dynamic equations of the wheel and of the perturbation (d).

4. Device for implementing the method according to Claim 3, **characterized in that** it comprises moreover, for carrying out the said second phase ($\varphi_2$) of determining the evolution of the speed of each wheel, second means ($M_2$) of so-called determination, on the basis of an estimation or of a measurement of the longitudinal speed ($V_{ref}$) of the vehicle on the one hand and of the measurement of the rotation speed ($\omega$) of the wheel on the other hand, consisting of a summator (13) carrying out the difference ($\delta\omega$) between these two measurements and then of two filters, a first first-order filter ($F_V$) on the speed and a second first-order filter ($F_A$) on the acceleration of the wheel, obtained by differentiating the speed, whose respective outputs ($d_v$ and $d_A$) are equal to:

$$d_V = \frac{\omega - \omega_{ref}}{\tau s + 1} \quad \text{and} \quad d_A = \frac{(\omega - \omega_{ref}) * s}{\tau s + 1}$$

s being the Laplace term, $\tau$ being the filtering coefficient dependent on the chosen sensor, these two values ($d_v$ and $d_A$) thereafter each being compared with a threshold ($s_v$ and $s_A$) respectively in comparators ($C_v$ and $C_A$) which each deliver, if the absolute values of ($d_v$ and $d_A$) do not each exceed their respective threshold

($s_v$ and $s_A$), a binary signal ($f_v$), respectively ($f_A$), equal to 1, and **in that** the outputs of these two comparators ($C_v$ and $C_A$) are dispatched to a logic circuit (14), which is an AND gate, making it possible to verify that the above two conditions on the speed and the acceleration are fulfilled simultaneously.

**5.** Device for implementing the method according to Claims 3 and 4, **characterized in that** it comprises moreover, for carrying out the said third phase ($\varphi_3$) of confirming the state of each wheel, third logic control means ($M_3$) of the AND gate type, receiving as input the output signals (F1) and (F2) respectively of the first estimation means and of the second determination means, so as to deliver an information signal (F3) about the state of the wheel.

**Patentansprüche**

**1.** Verfahren zur Bestimmung des Zustands der Räder eines mit einem an Bord befindlichen elektronischen Rechner und mit Sensoren ausgestatteten Kraftfahrzeugs, das aufweist:

- eine erste Phase ($\varphi_1$) der Schätzung der Drehgeschwindigkeit jedes Rads und ihrer Störung ausgehend von der durch einen Sensor gemessenen Geschwindigkeit ($\omega$) des Rads, vom Motordrehmoment ($C_m$) und vom Bremsmoment ($C_f$), die an es angelegt werden,
- eine zweite Phase ($\varphi_2$) der Bestimmung der Entwicklung der Geschwindigkeit jedes Rads bezüglich der Geschwindigkeit ($V_{ref}$) des Fahrzeugs,
- eine dritten Phase ($\varphi_3$) der Bestätigung des Zustands jedes Rads durch Vergleich der jeweiligen Ergebnisse der zwei vorhergehenden Phasen ($\varphi_1$) der Schätzung der Drehgeschwindigkeit und ($\varphi_2$) der Bestimmung der Entwicklung der Geschwindigkeit, um festzustellen, ob der Zustand des Rads normal ist, definiert durch eine Geschwindigkeit des Rads, die mit der Dynamik des Fahrzeugs kohärent ist, oder ob das Rad in einem Zustand des Durchdrehens oder in einem Blockierzustand ist,

**dadurch gekennzeichnet, dass** die Phase ($\varphi_2$) der Bestimmung der Entwicklung der Geschwindigkeit jedes Rads bezüglich der Geschwindigkeit ($V_{ref}$) des Fahrzeugs einen Schritt der Berechnung der Differenz zwischen der Messung der Drehgeschwindigkeit ($\omega$) des Rads und der gemessenen oder geschätzten Längsgeschwindigkeit ($V_{ref}$) des Fahrzeugs, dividiert durch den Radius (R) des Rads, gefolgt von einem Schritt der Filterung erster Ordnung des Fehlers bei der Geschwindigkeit, gleichzeitig mit einem Schritt der Filterung erster Ordnung des Fehlers bei der Beschleunigung aufweist, wobei diese zwei so erhaltenen Fehler bezüglich der Geschwindigkeit und der Beschleunigung anschließend mit unterschiedlichen und jeweiligen Schwellen ($s_v$) und ($s_A$) verglichen werden.

**2.** Bestimmungsverfahren nach Anspruch 1, **dadurch gekennzeichnet, dass** die Phase ($\varphi_1$) der Schätzung der Geschwindigkeit eines Rads und ihrer Störung einen ersten Schritt der Schätzung der Drehgeschwindigkeit ($\omega$) des Rads sowie ihrer Störung (d), homogen zu einer Beschleunigung, insbesondere durch einen Luenberger-Beobachter, ausgehend von der Messung seiner Geschwindigkeit ($\omega$), vom Motordrehmoment ($C_m$) und vom Bremsmoment ($C_f$), die an es angelegt werden, gefolgt von einem zweiten Schritt des Vergleichs der Schätzung der Störung ($\hat{d}$) an der Geschwindigkeit des Rads mit einer Schwelle ($s_d$) aufweist, um die Größe der Störung an der Schätzung zu bewerten.

**3.** Vorrichtung zur Anwendung des Verfahrens nach den Ansprüchen 1 und 2, **dadurch gekennzeichnet, dass** sie sich an Bord des Fahrzeugs befindet, und dass sie zur Durchführung der ersten Phase ($\varphi_1$) der Schätzung der Geschwindigkeit eines Rads erste so genannte Einrichtungen ($M_1$) zur Schätzung aufweist, ausgehend von der Messung seiner Geschwindigkeit ($\omega$), vom Motordrehmoment ($C_m$) und vom Bremsmoment ($C_f$), die an es angelegt werden, die die Eingänge eines Luenberger-Beobachters ($O_L$) bilden, der dazu bestimmt ist, diese Schätzung der Drehgeschwindigkeit ($\hat{\omega}$) des Rads sowie ihrer Störung (d), homogen zu einer Beschleunigung, zu liefern, wobei der Beobachter die dynamischen Gleichungen des Rads und der Störung (d) verwendet.

**4.** Vorrichtung zur Anwendung des Verfahrens nach Anspruch 3, **dadurch gekennzeichnet, dass** sie außerdem zur Durchführung der zweiten Phase ($\varphi_2$) der Bestimmung der Entwicklung der Geschwindigkeit jedes Rads zweite so genannte Einrichtungen ($M_2$) zur Bestimmung, ausgehend von einer Schätzung oder einer Messung der Längsgeschwindigkeit ($V_{ref}$) des Fahrzeugs einerseits und der Messung der Drehgeschwindigkeit ($\omega$) des Rads andererseits, aufweist, die aus einem Summierer (13), der die Differenz ($\omega$) zwischen diesen zwei Messungen bildet, dann aus zwei Filtern, einem ersten Filter ($F_v$) erster Ordnung der Geschwindigkeit und einem zweiten Filter ($F_A$) erster Ordnung der Beschleunigung des Rads, bestehen, die durch Ableitung der Geschwindigkeit erhalten wird, deren jeweilige Ausgänge ($d_v$ und $d_A$) entsprechen:

$$d_v = \frac{\omega - \omega_{ref}}{\tau s + 1} \quad \text{und } d_A = \frac{(\omega - \omega_{ref}) * s}{\tau s + 1}$$

wobei s der Laplace-Ausdruck, $\tau$ der Filterkoeffizient abhängig vom gewählten Sensor ist,
wobei diese zwei Werte ($d_v$ und $d_A$) anschließend je mit einer Schwelle ($s_v$ und $s_A$) jeweils in Komparatoren ($C_v$ und $C_A$) verglichen werden, die je, wenn die Absolutwerte von ($d_v$ und $d_A$) nicht jeder ihre jeweilige Schwelle ($s_v$ und $s_A$) überschreiten, ein Binärsignal ($f_v$) bzw. ($f_A$) gleich 1 liefern, und dass die Ausgänge dieser zwei Komparatoren ($C_v$ und $C_A$) an einen Logikkreis (14) gesendet werden, der ein UND-Glied ist, das es ermöglicht zu überprüfen, dass die zwei vorhergehenden Bedingungen bezüglich der Geschwindigkeit und der Beschleunigung gleichzeitig erfüllt werden.

5. Vorrichtung zur Anwendung des Verfahrens nach den Ansprüchen 3 und 4, **dadurch gekennzeichnet, dass** sie außerdem zur Durchführung der dritten Phase ($\varphi_3$) der Bestätigung des Zustands jedes Rads dritte logische Steuereinrichtungen ($M_3$) der Art UND-Glied aufweist, die am Eingang die Ausgangssignale (F1) bzw. (F2) der ersten Schätzeinrichtungen und der zweiten Bestimmungseinrichtungen empfangen, um ein Informationssignal (F3) über den Zustand des Rads zu liefern.

## FIG_1

## FIG_2

## FIG_3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6823242 B
- WO 9803380 A

- DE 10104600